(19) <span>Europäisches Patentamt</span> <span>European Patent Office</span> <span>Office européen des brevets</span>

(11) **EP 4 335 897 A1**

(12) # EUROPEAN PATENT APPLICATION
published in accordance with Art. 153(4) EPC

(43) Date of publication:
**13.03.2024  Bulletin 2024/11**

(21) Application number: **22819832.1**

(22) Date of filing: **28.02.2022**

(51) International Patent Classification (IPC):
*C08K 5/00* (2006.01)        *C08L 27/12* (2006.01)
*C09K 3/10* (2006.01)        *C08K 3/36* (2006.01)

(52) Cooperative Patent Classification (CPC):
**C08K 3/36; C08K 5/00; C08L 27/12; C09K 3/10**

(86) International application number:
**PCT/JP2022/008317**

(87) International publication number:
**WO 2022/259642 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **08.06.2021   JP 2021095693**

(71) Applicant: **Mitsubishi Cable Industries, Ltd.**
**Chiyoda-ku**
**Tokyo 100-8303 (JP)**

(72) Inventors:
• **YASUDA Hiroaki**
  **Amagasaki-shi, Hyogo 660-0856 (JP)**
• **HAMAMURA Takehiro**
  **Tokyo 100-8303 (JP)**
• **YAMAMOTO Tetsuya**
  **Amagasaki-shi, Hyogo 660-0856 (JP)**
• **IEZUMI Naofumi**
  **Amagasaki-shi, Hyogo 660-0856 (JP)**

(74) Representative: **Germain Maureau**
  **12, rue Boileau**
  **69006 Lyon (FR)**

(54) **UNCROSSLINKED FLUORORUBBER COMPOSITION, SEAL MATERIAL PRODUCED USING SAME, AND METHOD FOR PRODUCING SAME**

(57)    An uncrosslinked fluororubber composition contains a rubber component containing fluororubber as a main component, ionic liquid, and an organic resin filler other than perfluoro resin.

**EP 4 335 897 A1**

**Description**

TECHNICAL FIELD

The present invention relates to an uncrosslinked fluororubber composition, a seal produced using the composition, and a method for producing the seal.

BACKGROUND ART

For example, it has been known that a rubber composition containing fluororubber and ionic liquid is used as a rubber material for a seal. Patent Document 1 discloses a rubber material for a seal, which contains uncrosslinked crosslinkable fluororubber, ionic liquid, and a crosslinker. Patent Document 2 discloses that a rubber composition containing partially-fluorinated elastomer rubber and ionic liquid is used for forming a seal.

CITATION LIST

PATENT DOCUMENTS

PATENT DOCUMENT 1: Japanese Unexamined Patent Publication No. 2019-85475
PATENT DOCUMENT 2: Japanese Unexamined Patent Publication No. 2019-116629

SUMMARY OF THE INVENTION

The present invention relates to an uncrosslinked fluororubber composition containing a rubber component containing fluororubber as a main component, ionic liquid, and an organic resin filler other than perfluoro resin.

The present invention relates to a seal formed of a crosslinked fluororubber composition obtained by crosslinking the rubber component of the uncrosslinked fluororubber composition of the present invention.

The present invention relates to a method for producing a seal, which includes forming the uncrosslinked fluororubber composition of the present invention into a seal shape and crosslinking the rubber component.

DESCRIPTION OF EMBODIMENT

An embodiment will be described in detail below.

An uncrosslinked fluororubber composition according to the embodiment contains a rubber component containing fluororubber as a main component, ionic liquid, and an organic resin filler (hereinafter referred to as an "organic resin filler A") other than perfluoro resin. The uncrosslinked fluororubber composition can be used as a rubber material for various rubber products, and can be suitably used as a rubber material for a seal such as an O-ring, particularly for a seal used for a semiconductor manufacturing device. Here, the "perfluoro resin" in the present application refers to a polymer of which all monovalent atoms bonded to carbon atoms forming a main chain are fluorine atoms. Examples of the perfluoro resin include polytetrafluoroethylene (PTFE), copolymer (FEP) of tetrafluoroethylene (TFE) and hexafluoropropylene (HFP), and the like.

In an uncrosslinked fluororubber composition of which fluororubber is blended with ionic liquid, the ionic liquid is in a liquid state. Thus, there is a problem that a crosslinked fluororubber composition obtained by crosslinking such a uncrosslinked fluororubber composition cannot obtain sufficient mechanical properties.

On the other hand, the uncrosslinked fluororubber composition according to the above embodiment contains the rubber component containing fluororubber as a main component, and also contains the ionic liquid while containing the organic resin filler A. This produces the stiffening effect, such that the crosslinked fluororubber composition can obtain sufficient mechanical properties. In addition, since the uncrosslinked fluororubber composition contains the organic resin filler A, dust generation can be reduced even if the seal is exposed to plasma atmosphere when the uncrosslinked fluororubber composition is used as a rubber material for a seal used for a semiconductor manufacturing device.

Here, the content of fluororubber in the rubber component is 50% by mass or more, and from the point of view of sufficient mechanical properties of the crosslinked fluororubber composition, the content is suitably 80% by mass or more, more suitably 90% by mass or more, and much more suitably 100% by mass. The rubber component may contain, nitrile-butadiene rubber, silicone rubber, ethylene propylene rubber, and the like, in addition to the fluororubber.

Examples of the fluororubber include copolymer (binary FKM) of vinylidene fluoride (VDF) and hexafluoropropylene (HFP), copolymer (ternary FKM) of vinylidene fluoride (VDF), hexafluoropropylene (HFP), and tetrafluoroethylene

**EP 4 335 897 A1**

(TFE), copolymer (FEP) of tetrafluoroethylene (TFE) and propylene (Pr), copolymer of vinylidene fluoride (VDF), propylene (Pr), and tetrafluoroethylene (TFE), copolymer (ETFE) of ethylene (E) and tetrafluoroethylene (TFE), copolymer of ethylene (E), tetrafluoroethylene (TFE), and perfluoromethyl vinyl ether (PMVE), copolymer of vinylidene fluoride (VDF), tetrafluoroethylene (TFE), and perfluoromethyl vinyl ether (PMVE), copolymer (FFKM) of tetrafluoroethylene (TFE) and perfluoromethyl vinyl ether (PMVE), copolymer of vinylidene fluoride (VDF) and perfluoromethyl vinyl ether (PMVE), and the like. The fluororubber suitably contains one or more of those components, more suitably contains vinylidene fluoride fluororubber such as binary FKM or ternary FKM from the point of view of sufficient mechanical properties of the crosslinked fluororubber composition, and more suitably contains ternary FKM from the point of view that excellent plasma resistance is obtained even if the seal is exposed to plasma atmosphere when the uncrosslinked fluororubber composition is used as a rubber material for a seal used for a semiconductor manufacturing device.

The "ionic liquid" in the present application is salt containing cations and anions, and refers to liquid having a melting point of 100°C or lower.

Examples of the cation in the ionic liquid include an imidazolium cation, a pyridinium cation, a pyrrolidinium cation, an ammonium cation, and the like. Examples of the imidazolium cation include a 1-ethyl-3-methylimidazolium cation, a 1-methyl-3-methylimidazolium cation, a 1-butyl-3-methylimidazolium cation, a 1-hexyl-3-methylimidazolium cation, a 1-octyl-3-methylimidazolium cation, a 1-methyl-2,3-dimethylimidazolium cation, a 1-butyl-2,3-dimethylimidazolium cation, a 1-hexyl-2,3-dimethylimidazolium cation, a 1-octyl-2,3-dimethylimidazolium cation, and the like. Examples of the pyridinium cation include a 1-octyl-4-methyl-pyridinium cation, a 1-methyl-pyridinium cation, a 1-butyl-pyridinium cation, a 1-hexyl-pyridinium cation, and the like. Examples of the pyrrolidinium cation include a 1-ethyl-1-methylpyrrolidinium cation, and the like. Examples of the ammonium cation include a tributylmethylammonium cation, and the like. The cations in the ionic liquid suitably include one or more of those cations.

Examples of the anion in the ionic liquid include a bis(fluorosulfonyl)imide anion, a fluorinated sulfonic acid anion, a fluorinated carboxylic acid anion, a thiocyanate anion, a dicyanamide anion, a tetracyanoborate anion, and the like. Examples of the bis(fluorosulfonyl)imide anion include a bis(fluorosulfonyl)imide anion, a bis(trifluoromethanesulfonyl)imide anion, a bis(trifluorobutanesulfonyl)imide anion, and the like. Examples of the fluorinated sulfonic acid anion include a tetrafluoroborate anion, a hexafluoroborate anion, a trifluoromethanesulfonate anion, and the like. Examples of the fluorinated carboxylic acid anion include a trifluoroacetate anion, and the like. The anions in the ionic liquid suitably include one or more of those anions, and from the point of view of sufficient mechanical properties of the crosslinked fluororubber composition, the anions more suitably include a fluorine atom-containing anion such as a bisfluorosulfonylimide anion, a fluorinated sulfonic acid anion, or a fluorinated carboxylic acid anion.

The ionic liquid suitably contains a combination of one or more of those cations and one or two or more of those anions, and from the point of view of sufficient mechanical properties of the crosslinked fluororubber composition, the ionic liquid more suitably contains 1-butyl-3-methylimidazolium bis(trifluoromethanesulfonyl)imide, 1-ethyl-1-methylpyrrolidinium bis(trifluoromethanesulfonyl)imide, or tributylmethylammonium bis(trifluoromethanesulfonyl)imide.

The content P of the ionic liquid in the uncrosslinked fluororubber composition according to the embodiment is suitably 0.1 parts by mass or more and 10 parts by mass or less, more suitably 0.2 parts by mass or more and 5 parts by mass or less, and much more suitably 0.5 parts by mass or more and 1.5 parts by mass or less relative to 100 parts by mass of the rubber component, from the point of view of sufficient mechanical properties of the crosslinked fluororubber composition.

Examples of the organic resin filler A include a phenol resin filler; a polyether ether ketone (PEEK) resin filler; a fluororesin filler other than the perfluoro resin, such as a polyvinylidene fluoride (PVDF) resin filler; and the like. The organic resin filler A suitably includes one or more of those fillers.

The organic resin filler A suitably includes a phenol resin filler from the point of view that the crosslinked fluororubber composition can obtain sufficient mechanical properties and also that crosslinking of the uncrosslinked fluororubber composition can be promoted. The phenol resin is suitably of neither a resol type nor a novolac type, from the same point of view. The phenol resin also suitably has a methylol group in a molecule, from the same point of view.

The organic resin filler A suitably includes a fluororesin filler other than the perfluoro resin, and more suitably includes a PVDF resin filler, from the point of view that dust generation can be reduced even if the seal is exposed to plasma atmosphere when the uncrosslinked fluororubber composition is used as a rubber material for a seal used for a semiconductor manufacturing device.

The average particle size of the organic resin filler A is suitably 0.5 $\mu$m or more and 20 $\mu$m or less, more suitably 1 $\mu$m or more and 10 $\mu$m or less, and much more suitably 1.2 $\mu$m or more and 2 $\mu$m or less, from the point of view of sufficient mechanical properties of the crosslinked fluororubber composition.

The content Q of the organic resin filler A in the uncrosslinked fluororubber composition according to the embodiment, where a filler other than the organic resin filler A is contained, is suitably 0.5 parts by mass or more and 30 parts by mass or less, more suitably 1 part by mass or more and 20 parts by mass or less, and much more suitably 1 part by mass or more and 10 parts by mass or less relative to 100 parts by mass of the rubber component, from the point of view of sufficient mechanical properties of the crosslinked fluororubber composition. The content, where a filler other than the organic resin filler A is not contained, is suitably 1 part by mass or more and 50 parts by mass or less, more suitably 2 parts by mass or more and 40 parts by mass or less, and much more suitably 3 parts by mass or more and 30 parts by mass or less relative to 100 parts by mass of the rubber component.

If the organic resin filler A contains a fluororesin filler other than the perfluoro resin, the content of the fluororesin filler other than the perfluoro resin in the uncrosslinked fluororubber composition according to the embodiment is suitably 1 part by mass or more and 25 parts by mass or less, more suitably 2 parts by mass or more and 10 parts by mass or less, and much more suitably 3 parts by mass or more and 7 parts by mass or less relative to 100 parts by mass of the rubber component from the point of view that dust generation can be reduced even if the seal is exposed to plasma atmosphere when the uncrosslinked fluororubber composition is used as a rubber material for a seal used for a semiconductor manufacturing device.

The content Q of the organic resin filler A in the uncrosslinked fluororubber composition according to the embodiment, where a filler other than the organic resin filler A is contained, is suitably more than or equal to the content P of the ionic liquid, from the point of view of sufficient mechanical properties of the crosslinked fluororubber composition. In this case, the ratio (Q/P) of the content Q of the organic resin filler A to the content P of the ionic liquid in the uncrosslinked fluororubber composition is suitably 1 or more and 15 or less, and more suitably 1.5 or more and 10 or less, from the same point of view. The content Q of the organic resin filler A, where if a filler other than the organic resin filler A is not contained, is suitably greater than the content P of the ionic liquid, from the same point of view. In this case, the ratio (Q/P) of the content Q of the organic resin filler A to the content P of the ionic liquid in the uncrosslinked fluororubber composition is suitably 5 or more and 40 or less, and more suitably 10 or more and 30 or less, from the same point of view.

The uncrosslinked fluororubber composition according to the embodiment suitably further contains silica as a filler, from the point of view of sufficient mechanical properties of the crosslinked fluororubber composition. Examples of the silica include dry silica such as fumed silica and wet silica such as precipitated silica. The surface of the silica may be hydrophobized with, e.g., organochlorosilane, organoalkoxysilane, hexaorganodisilazane, organosiloxane oligomer, or the like. The silica suitably includes one or more of those components, and from the same point of view, the silica more suitably includes dry silica whose surface is hydrophobized with organochlorosilane and much more suitably includes fumed silica whose surface is hydrophobized with dimethyldichlorosilane.

When the uncrosslinked fluororubber composition according to the embodiment contains silica as a filler, the mechanical properties of the crosslinked fluororubber composition can be effectively enhanced even if the content of silica is small. Further, when the uncrosslinked fluororubber composition is used as a rubber material for a seal used for a semiconductor manufacturing device, the silica does not generate dust even if the seal is exposed to plasma atmosphere. On the other hand, the silica may inhibit crosslinking of the uncrosslinked fluororubber composition when used in combination with the ionic liquid. However, when the phenol resin filler is used as an organic resin filler A, crosslinking of the uncrosslinked fluororubber composition can be promoted as described above, and thus crosslinking thereof can be less inhibited. Thus, the uncrosslinked fluororubber composition containing silica as a filler suitably also contains the phenol resin filler as an organic resin filler A.

The uncrosslinked fluororubber composition according to the embodiment, where the organic resin filler A contains a fluororesin filler other than the perfluoro resin, suitably does not contain silica because the crosslinked fluororubber composition can obtains sufficiently high mechanical properties. Even in this case, the uncrosslinked fluororubber composition may contain silica.

The content R of the silica in the uncrosslinked fluororubber composition according to the embodiment is suitably 1 part by mass or more and 20 parts by mass or less, and more suitably 5 parts by mass or more and 15 parts by mass or less, relative to 100 parts by mass of the rubber component, from the point of view of sufficient mechanical properties of the crosslinked fluororubber composition.

The content R of the silica in the uncrosslinked fluororubber composition according to the embodiment is suitably greater than the content P of the ionic liquid, from the point of view of sufficient mechanical properties of the crosslinked fluororubber composition. The ratio (R/P) of the content R of the silica to the content P of the ionic liquid in the uncrosslinked fluororubber composition is suitably 3 or more and 20 or less, and more suitably 5 or more and 15 or less, from the same point of view.

The content R of the silica in the uncrosslinked fluororubber composition according to the embodiment is suitably more than or equal to the content Q of the organic resin filler A, from the point of view of sufficient mechanical properties of the crosslinked fluororubber composition. The ratio (R/Q) of the content R of the silica to the content Q of the organic resin filler A in the uncrosslinked fluororubber composition is suitably 1 or more and 15 or less, and more suitably 1 or more and 3 or less, from the same point of view.

The uncrosslinked fluororubber composition according to the embodiment may further contain a crosslinker. Examples of the crosslinker include organic peroxide, polyol, polyamine, triazine, and the like. The crosslinker suitably includes organic peroxide among those components, from the point of view of sufficient mechanical properties of the crosslinked fluororubber composition.

Examples of the organic peroxide include dialkyl peroxides such as dicumyl peroxide, 1,3-di(t-butylperoxy)diisopropylbenzene, 1,4-di(t-butylperoxy)diisopropylbenzene, t-butylcumyl peroxide, 2,5-dimethyl-2,5-di(t-butylperoxy)hexane. and 2,5-dimethyl-2,5-bis(t-butylperoxy)hexane-3; peroxyketals such as 1,1-di(t-hexylperoxy)cyclohexane, 1,1-di(t-butylperoxy)cyclohexane, and n-butyl-4,4-di(t-butylperoxy)valerate; peroxyesters such as 2,5-dimethyl-2,5-di(benzoylperoxy)hexane, t-hexylperoxybenzoate, and t-butylperoxybenzoate; and the like. The organic peroxide suitably includes one or more of those components, and from the point of view of sufficient mechanical properties of the crosslinked fluororubber composition, the organic peroxide more suitably includes 2,5-dimethyl-2,5-di(t-butylperoxy)hexane.

The content X of the organic peroxide as the crosslinker in the uncrosslinked fluororubber composition according to the embodiment is suitably 0.5 parts by mass or more and 5 parts by mass or less, more suitably 0.5 parts by mass or more and 4 parts by mass or less, and much more suitably 1 part by mass or more and 2 parts by mass or less relative to 100 parts by mass of the rubber component, from the point of view of sufficient mechanical properties of the crosslinked fluororubber composition.

The uncrosslinked fluororubber composition according to the embodiment containing organic peroxide as a crosslinker may further contain a crosslinking aid. Examples of the crosslinking aid include allyl crosslinking aids such as triallyl isocyanurate, diallyl fumarate, diallyl phthalate, tetraallyloxyethane, and trimethallyl isocyanurate; maleimide crosslinking aids such as N,N'-m-phenylenebismaleimide, maleimide, and phenylmaleimide; methacrylate crosslinking aids such as trimethylolpropane trimethacrylate, ethylene glycol dimethacrylate, triethylene glycol dimethacrylate, tetraethylene glycol dimethacrylate, and polyethylene glycol dimethacrylate; 1,2-polybutadiene; and the like. The crosslinking aid suitably includes one or more of those components, and from the point of view of sufficient mechanical properties of the crosslinked fluororubber composition, the crosslinking aid more suitably includes an allyl crosslinking aid and much more suitably includes triallyl isocyanurate.

The content Y of the crosslinking aid in the uncrosslinked fluororubber composition according to the embodiment is suitably 1 part by mass or more and 10 parts by mass or less, more suitably 2 parts by mass or more and 8 parts by mass or less, and much more suitably 2 part by mass or more and 6 parts by mass or less relative to 100 parts by mass of the rubber component, from the point of view of sufficient mechanical properties of the crosslinked fluororubber composition.

The content Y of the crosslinking aid in the uncrosslinked fluororubber composition according to the embodiment is suitably greater than the content X of the organic peroxide, from the point of view of sufficient mechanical properties of the crosslinked fluororubber composition. The ratio (Y/X) of the content Y of the crosslinking aid to the content X of the organic peroxide in the uncrosslinked fluororubber composition is suitably 1 or more and 10 or less, and more suitably 1.5 or more and 4 or less, from the same point of view.

The uncrosslinked fluororubber composition according to the embodiment may contain other rubber compounding agents as necessary. However, when used as a rubber material for a seal used for a semiconductor manufacturing device, the uncrosslinked fluororubber composition suitably does not contain a conductive filler such as carbon black, conductive carbon, metal oxide, and the like, from the point of view of preventing dust generation when the seal is exposed to plasma atmosphere.

The uncrosslinked fluororubber composition according to the embodiment can be obtained by putting the rubber component containing the fluororubber as the main component into a rubber kneading machine such as an open roll, a Banbury mixer, or the like; masticating the rubber component; adding various rubber compounding agents including the ionic liquid and the organic resin filler A to the rubber component; and kneading the resultant mixture.

By crosslinking the rubber component using the uncrosslinked fluororubber composition according to the embodiment having the above configuration, a seal used for a semiconductor manufacturing device can be produced, for example.

The crosslinked fluororubber composition forming the seal produced using the uncrosslinked fluororubber composition according to the embodiment has the hardness Hs of suitably A50 or more and A95 or less. The hardness Hs is measured as an instantaneous value obtained when a pressure plate is made contact with a test specimen by using a type A durometer in accordance with JIS K6253-3: 2012.

The crosslinked fluororubber composition forming the seal has the tensile strength Tb of suitably 10 MPa or more. The extension Eb is suitably 100% or more. The tensile stress S100 at 100% extension is suitably 1 MPa or more and 10 MPa or less. The tensile strength Tb, the extension Eb, and the tensile stress S100 at 100% extension are measured using a dumbbell-shaped No. 3 test specimen in accordance with JIS K6251: 2017.

The permanent compression set of the crosslinked fluororubber composition forming the seal is suitably 40% or less, more suitably 35% or less, and much more suitably 30% or less. The permanent compression set is measured using a sample obtained by cutting an AS-214 O-ring in half in accordance with JIS K6262: 2013 at a test temperature of 200°C for a test time of 72 hours.

The volume resistivity of the crosslinked fluororubber composition forming the seal is suitably $1.0 \times 10^{13}$ $\Omega \cdot$cm or less, and more suitably $1.0 \times 10^{12}$ $\Omega \cdot$cm or less. The volumetric resistivity is measured with an applied voltage of 500 V by a double ring electrode method in accordance with JIS K6271-1: 2015.

The mass reduction rate (plasma resistance) of the crosslinked fluororubber composition forming the seal by plasma irradiation is suitably 3% or less, and more suitably 2.5% or less. The mass reduction rate is calculated based on the following equation including the masses before and after exposure of the crosslinked fluororubber composition for 30 minutes to plasma generated under the conditions of a frequency of 2.45 GHz, a pressure of 100 Pa, and an output of 1500 W with a gas mixture obtained by mixing $O_2$ gas and $CF_4$ gas at a volumetric ratio of 50:1 is used.

$$\text{Mass reduction rate (\%)} = \{(\text{Mass before exposure} - \text{Mass after exposure})/\text{Mass before exposure}\} \times 100$$

Next, an example of a seal production method using the uncrosslinked fluororubber composition according to the embodiment will be described where the method includes forming the uncrosslinked fluororubber composition into a seal shape and then crosslinking the rubber component therein.

First, a predetermined amount of the uncrosslinked fluororubber composition according to the embodiment is prepared, and this uncrosslinked fluororubber composition is loaded into a cavity formed in a mold and having a seal shape. Then, the mold is clamped so that the uncrosslinked fluororubber composition is formed into the seal shape.

Next, the mold is sandwiched between hot plates to perform press-molding so that the uncrosslinked fluororubber composition formed into the seal shape is heated and pressed at a predetermined temperature (e.g., 160°C to 170°C) under a predetermined pressure (e.g., 10 MPa to 20 MPa) for a predetermined time (e.g., 5 minutes to 30 minutes). Consequently, the rubber component is primarily crosslinked, and a primary crosslinked product is obtained (primary crosslinking step).

Then, the primary crosslinked product is removed from the mold, and then put into an oven. Then, the primary crosslinked product is subjected to annealing so as to be heated at a higher temperature (e.g., 190°C to 210°C) for a longer time (e.g., 3 to 5 hours) than in the primary crosslinking step. Consequently, the rubber component is secondarily crosslinked, and a secondary crosslinked product is obtained (secondary crosslinking step).

The method for producing the seal may include the primary crosslinking step and the secondary crosslinking step, and the secondary crosslinked product may be used as the seal as it is. However, from the point of view of sufficient mechanical properties of the crosslinked fluororubber composition, the method for producing the seal may further include a radiation crosslinking step of crosslinking the rubber component by radiation exposure, in addition to the primary crosslinking step and the secondary crosslinking step. In this case, in the radiation crosslinking step, the secondary crosslinked product is suitably exposed to radiation, i.e., the radiation crosslinking step is suitably performed after the secondary crosslinking step, from the same point of view. Here, examples of the radiation include $\alpha$ rays, $\beta$ rays, $\gamma$ rays, electron beams, ions, and the like. Among those types of radiation, the radiation is suitably electron beams or $\gamma$ rays. The amount of radiation exposure is, for example, 10 kGy or more and 100 kGy or less.

[Examples]

(Uncrosslinked Fluororubber Composition)

The uncrosslinked fluororubber compositions of Examples 1 to 11 and Comparative Examples 1 to 5 were prepared as shown below. The compositions of the examples are shown also in Table 1.

<Example 1>

The uncrosslinked fluororubber composition of Example 1 was prepared as follows: ternary FKM (Tecnoflon P959 manufactured by Solvay Specialty Polymers Japan K.K.) was used as the rubber component, and was blended and kneaded with 1 part by mass of 1-butyl-3-methylimidazolium bis(trifluoromethanesulfonyl)imide (BMIN111 manufactured by Mitsubishi Materials Electronic Chemicals Co., Ltd.) as the ionic liquid, 1 part by mass of phenol resin filler (BellPearl R100 manufactured by Air Water Bell Pearl Co. and having an average particle size of 1.5 $\mu$m), 10 parts by mass of fumed silica (AEROSIL R976S manufactured by Nippon Aerosil Co. Ltd.) hydrophobized with dimethyldichlorosilane, 1.5 parts by mass of 2,5-dimethyl-2,5-di(t-butylperoxy)hexane (PERHEXA 25B manufactured by NOF Corporation) as organic peroxide, and 4 parts by mass of triallyl isocyanurate (TAIC manufactured by Mitsubishi Chemical Corporation) as a crosslinking aid, relative to 100 parts by mass of the rubber component.

<Example 2>

The uncrosslinked fluororubber composition of Example 2 was prepared in the same manner as that in Example 1, except that the blending amount of the phenol resin filler was 5 parts by mass relative to 100 parts by mass of the rubber component.

<Example 3>

The uncrosslinked fluororubber composition of Example 3 was prepared in the same manner as that in Example 2, except that 1-ethyl-1-methylpyrrolidinium bis(trifluoromethanesulfonyl)imide (P12N111 manufactured by Mitsubishi Materials Electronic Chemicals Co., Ltd.) was used as the ionic liquid.

<Example 4>

The uncrosslinked fluororubber composition of Example 4 was prepared in the same manner as that in Example 2, except that tributylmethylammonium bis(trifluoromethanesulfonyl)imide (FC-4400 manufactured by 3M Company) was used as the ionic liquid.

<Example 5>

The uncrosslinked fluororubber composition of Example 5 was prepared in the same manner as that in Example 2, except that not-hydrophobized hydrophilic fumed silica (AEROSIL 200 manufactured by Nippon Aerosil Co. Ltd.) was used.

<Example 6>

The uncrosslinked fluororubber composition of Example 6 was prepared in the same manner as that in Example 1, except that the blending amount of the phenol resin filler was 25 parts by mass relative to 100 parts by mass of the rubber component with no fumed silica blended.

<Example 7>

The uncrosslinked fluororubber composition of Example 7 was prepared in the same manner as that in Example 1, except that 25 parts by mass of a PVDF resin filler (Kynar MG15 manufactured by Arkema Global and having an average particle size of 10 $\mu$m) was blended relative to 100 parts by mass of the rubber component with no phenol resin filler and no fumed silica blended.

<Example 8>

The uncrosslinked fluororubber composition of Example 8 was prepared in the same manner as that in Example 1, except that 25 parts by mass of a PEEK resin filler (VESTAKEEP 2000UFP10 manufactured by Daicel-Evonik Ltd. and having an average particle size of 10 $\mu$m) was blended relative to 100 parts by mass of the rubber component with no phenol resin filler and no fumed silica blended.

<Example 9>

The uncrosslinked fluororubber composition of Example 9 was prepared in the same manner as that in Example 1, except that the blending amount of the phenol resin filler was 5 parts by mass relative to 100 parts by mass of the rubber component with no fumed silica blended.

<Example 10>

The uncrosslinked fluororubber composition of Example 10 was prepared in the same manner as that in Example 9, except that 5 parts by mass of a PVDF resin filler was blended relative to 100 parts by mass of the rubber component with no phenol resin filler blended.

<Example 11>

The uncrosslinked fluororubber composition of Example 11 was prepared in the same manner as that in Example 9, except that 5 parts by mass of a PEEK resin filler was blended relative to 100 parts by mass of the rubber component with no phenol resin filler blended.

<Comparative Example 1>

The uncrosslinked fluororubber composition of Comparative Example 1 was prepared in the same manner as that in Example 1, except that no phenol resin filler and no fumed silica were blended.

<Comparative Example 2>

The uncrosslinked fluororubber composition of Comparative Example 1 was prepared in the same manner as that in Example 1, except that no ionic liquid and no phenol resin filler were blended.

<Comparative Example 3>

The uncrosslinked fluororubber composition of Comparative Example 3 was prepared in the same manner as that in Example 1, except that 25 parts by mass of a PTFE resin filler (Rubron L-5 manufactured by Daikin Industries, Ltd. and having an average particle size of 5 to 7 $\mu$m) was blended relative to 100 parts by mass of the rubber component with no phenol resin filler and no fumed silica blended.

<Comparative Example 4>

The uncrosslinked fluororubber composition of Comparative Example 4 was prepared in the same manner as that in Example 1, except that 25 parts by mass of carbon black (Thermax N990 manufactured by Cancarb Limited) was blended relative to 100 parts by mass of the rubber components with no phenol resin filler and no fumed silica blended.

<Comparative Example 5>

The uncrosslinked fluororubber composition of Example 5 was prepared in the same manner as that in Example 9, except that 5 parts by mass of a PTFE resin filler was blended relative to 100 parts by mass of the rubber component with no phenol resin filler blended.

[Table 1]

| | Examples | | | | | | | | | | | Comparative Examples | | | | |
|---|---|---|---|---|---|---|---|---|---|---|---|---|---|---|---|---|
| | 1 | 2 | 3 | 4 | 5 | 6 | 7 | 8 | 9 | 10 | 11 | 1 | 2 | 3 | 4 | 5 |
| FKM | 100 | 100 | 100 | 100 | 100 | 100 | 100 | 100 | 100 | 100 | 100 | 100 | 100 | 100 | 100 | 100 |
| Ionic liquid 1 P | 1 | 1 | | | 1 | 1 | 1 | 1 | 1 | 1 | 1 | 1 | | 1 | 1 | 1 |
| Ionic liquid 2 P | | | 1 | | | | | | | | | | | | | |
| Ionic liquid 3 P | | | | 1 | | | | | | | | | | | | |
| Phenol Resin Filler Q | 1 | 5 | 5 | 5 | 5 | 5 | | | 5 | | | | | | | |
| PVDF Resin Filler Q | | | | | | | 25 | | | 5 | | | | | | |
| PEEK Resin Filler Q | | | | | | | | 25 | | | 5 | | | | | |
| PTFE Resin Filler | | | | | | | | | | | | | | 25 | | 5 |
| Carbon Black | | | | | | | | | | | | | | | 25 | |
| Hydrophobized Silica R | 10 | 10 | 10 | 10 | | | | | | | | | 10 | | | |
| Hydrophilic Silica R | | | | | 10 | | | | | | | | | | | |
| Organic Peroxide X | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Crosslinking Aid Y | 4 | 4 | 4 | 4 | 4 | 4 | 4 | 4 | 4 | 4 | 4 | 4 | 4 | 4 | 4 | 4 |
| Q/P | 1 | 5 | 5 | 5 | 5 | 25 | 25 | 25 | 5 | 5 | 5 | | | 25 | | 5 |
| RP | 10 | 10 | 10 | 10 | 10 | | | | | | | | | | | |
| R/Q | 10 | 2 | 2 | 2 | 2 | | | | | | | | | | | |
| Y/X | 2.7 | 2.7 | 2.7 | 2.7 | 2.7 | 2.7 | 2.7 | 2.7 | 2.7 | 2.7 | 2.7 | 2.7 | 2.7 | 2.7 | 2.7 | 2.7 |
| Hs | 70 | 73 | 72 | 73 | 74 | 74 | 68 | 73 | 60.6 | 59.8 | 60.3 | 56 | 70 | 63 | 70 | 57.1 |
| Tb MPa | 19.8 | 21.5 | 22.1 | 20.4 | 18.2 | 19.3 | 17.2 | 13.2 | 14.7 | 12.5 | 14.4 | 9.7 | 20.3 | 15.0 | 22.1 | 14.6 |
| Eb % | 220 | 210 | 210 | 200 | 170 | 180 | 270 | 240 | 270 | 365 | 402 | 340 | 220 | 350 | 230 | 432 |
| S100 MPa | 4.6 | 5.2 | 5.2 | 5.1 | 5.6 | 7.5 | 5.9 | 6.7 | 1.6 | 1.7 | 1.3 | 1.4 | 4.7 | 1.9 | 5.6 | 1.4 |
| CS % | 22 | 18 | 19 | 18 | 17 | 27 | 34 | 35 | 13 | 39 | 35 | 26 | 24 | 27 | 25 | 40 |
| Volume Resistivity $\times 10^{11}$ $\Omega \cdot$ cm | 2.2 | 2.5 | 2.7 | 3.0 | 2.4 | 4.4 | 1.8 | 3.4 | 0.37 | 0.43 | 0.3 | 2.9 | 390 | 1.3 | 0.95 | 0.3 |

(continued)

|  |  | Examples | | | | | | | | | | | Comparative Examples | | | | |
|---|---|---|---|---|---|---|---|---|---|---|---|---|---|---|---|---|---|
|  |  | 1 | 2 | 3 | 4 | 5 | 6 | 7 | 8 | 9 | 10 | 11 | 1 | 2 | 3 | 4 | 5 |
| Plasma Resistance | Occurrence of Dust Generation | No | No | No | No | No | No | No | No | No | No | No | No | No | Yes | Yes | Yes |
|  | Mass Reduction Rate (%) | 2.0 | 2.1 | 2.1 | 2.0 | 1.9 | 2.6 | 2.3 | 2.5 | 0.7 | 0.5 | 0.9 | 1.9 | 2.0 | 1.1 | 3.1 | 0.9 |

An uncrosslinked fluororubber composition similar to that of Example 1 except that no phenol resin filler was blended and an uncrosslinked fluororubber composition similar to that of Example 1 except that no phenol resin filler was blended and the blending amount of the ionic liquid was set to 0.1 parts by mass relative to 100 parts by mass of the rubber component were also prepared, but no crosslinked product was obtained from those compositions.

(Test Method and Results)

Test specimens of the respective crosslinked fluororubber compositions were formed from the uncrosslinked fluororubber compositions described above. The following tests were performed using those test specimens. The results are shown in Table 1.

<Hardness>

The uncrosslinked fluororubber compositions of Examples 1 to 11 and Comparative Examples 1 to 5 were used to prepare sheet-shaped test specimens of the crosslinked fluororubber compositions each having a thickness of 6 mm. Then, the hardness Hs thereof was measured as an instantaneous value obtained when a pressure plate was made contact with the test specimen by using a type A durometer in accordance with JIS K6253-3: 2012.

<Tensile Properties>

The uncrosslinked fluororubber compositions of Examples 1 to 11 and Comparative Examples 1 to 5 were used to prepare dumbbell-shaped No. 3 test specimens of the crosslinked fluororubber compositions. Then, the tensile strength Tb, the extension Eb, and the tensile stress S100 at 100% extension were measured in accordance with JIS K6251: 2017.

<Permanent Compression Set>

The uncrosslinked fluororubber compositions of Examples 1 to 11 and Comparative Examples 1 to 5 were used to prepare AS-214 O-rings formed of the crosslinked fluororubber compositions, where the rings were cut in half to serve as samples. Then, the permanent compression set CS thereof was measured at a test temperature of 200°C for a test time of 72 hours in accordance with JIS K6262: 2013.

<Volume Resistivity>

The uncrosslinked fluororubber compositions of Examples 1 to 11 and Comparative Examples 1 to 5 were used to prepare test specimens (100 × 100 × t2 mm sheets) of the crosslinked fluororubber compositions. Then, the volume resistivity thereof was measured with an applied voltage of 500 V by a double ring electrode method in accordance with JIS K6271-1: 2015.

<Plasma Resistance>

The uncrosslinked fluororubber compositions of Examples 1 to 11 and Comparative Examples 1 to 5 were used to prepare AS-214 O-rings as samples formed of the crosslinked fluororubber compositions. Then, the samples were set in a plasma exposure device (manufactured by Shinko Seiki Co., Ltd.), and exposed for 30 minutes to plasma generated under the conditions of a frequency of 2.45 GHz, a pressure of 100 Pa, and an output of 1500 W by using a gas mixture obtained by mixing $O_2$ gas and $CF_4$ gas at a volumetric ratio of 50:1. Occurrence of dust generation at that time was visually checked. The mass reduction rate was calculated based on the following equation including the masses before and after such exposure.

$$\text{Mass reduction rate (\%)} = \{(\text{Mass before exposure} - \text{Mass after exposure})/\text{Mass before exposure}\} \times 100$$

Among Examples 1 to 11 and Comparative Examples 1 to 5, Example 10 where 5 parts by mass of the PVDF resin filler was blended relative to 100 parts by mass of the ternary FKM as the rubber component showed the smallest mass reduction rate and excellent plasma resistance.

INDUSTRIAL APPLICABILITY

The present invention is useful for a technical field related to an uncrosslinked fluororubber composition, a seal produced using the composition, and a method for producing the seal.

**Claims**

1.  An uncrosslinked fluororubber composition comprising: a rubber component containing fluororubber as a main component; ionic liquid; and an organic resin filler other than perfluoro resin.

2.  The uncrosslinked fluororubber composition of claim 1, wherein
    the fluororubber includes vinylidene fluoride fluororubber.

3.  The uncrosslinked fluororubber composition of claim 2, wherein
    the fluororubber includes copolymer of vinylidene fluoride, hexafluoropropylene, and tetrafluoroethylene.

4.  The uncrosslinked fluororubber composition of any one of claims 1 to 3, wherein
    the ionic liquid includes an anion having a fluorine atom.

5.  The uncrosslinked fluororubber composition of any one of claims 1 to 4, wherein
    the ionic liquid includes a cation including one or more of an imidazolium cation, a pyridinium cation, a pyrrolidinium cation, and an ammonium cation.

6.  The uncrosslinked fluororubber composition of any one of claims 1 to 5, wherein
    the organic resin filler includes a phenolic resin filler.

7.  The uncrosslinked fluororubber composition of claim 6, further comprising: silica.

8.  The uncrosslinked fluororubber composition of any one of claims 1 to 5, wherein
    the organic resin filler includes a fluororesin filler other than a perfluoro resin.

9.  The uncrosslinked fluororubber composition of claim 8, wherein
    the uncrosslinked fluororubber composition contains no silica.

10. The uncrosslinked fluororubber composition of any one of claims 1 to 9, further comprising:
    organic peroxide as a crosslinker.

11. The uncrosslinked fluororubber composition of claim 10, further comprising:
    a crosslinking aid.

12. A seal formed of a crosslinked fluororubber composition obtained by crosslinking the rubber component of the uncrosslinked fluororubber composition of any one of claims 1 to 11.

13. The seal of claim 12, wherein
    the crosslinked fluororubber composition has a permanent compression set of 40% or less.

14. The seal of claim 12 or 13, wherein
    the crosslinked fluororubber composition has a mass reduction rate of 3% or less which is calculated from masses before and after exposure of the crosslinked fluororubber composition for 30 minutes to plasma generated under conditions of a frequency of 2.45 GHz, a pressure of 100 Pa, and an output of 1500 W by using a gas mixture obtained by mixing $O_2$ gas and $CF_4$ gas at a volumetric ratio of 50:1.

15. The seal of any one of claims 12 to 14, wherein
    the seal is used for a semiconductor manufacturing device.

16. A method for producing a seal, comprising: forming the uncrosslinked fluororubber composition of any one of claims 1 to 11 into a seal shape and crosslinking the rubber component.

# EP 4 335 897 A1

| INTERNATIONAL SEARCH REPORT | International application No. |
|---|---|
| | **PCT/JP2022/008317** |

**A. CLASSIFICATION OF SUBJECT MATTER**

*C08K 5/00*(2006.01)i; *C08L 27/12*(2006.01)i; *C09K 3/10*(2006.01)i; *C08K 3/36*(2006.01)i
FI: C08L27/12; C09K3/10 M; C08K5/00; C08K3/36

According to International Patent Classification (IPC) or to both national classification and IPC

**B. FIELDS SEARCHED**

Minimum documentation searched (classification system followed by classification symbols)

C08K5/00; C08L27/12; C09K3/10; C08K3/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-85475 A (MITSUBISHI CABLE IND LTD) 06 June 2019 (2019-06-06) claims, paragraphs [0010], [0012], [0023], examples, comparative examples | 1-5, 7-16 |
| Y | | 1-16 |
| Y | WO 2004/094527 A1 (DAIKIN INDUSTRIES LTD) 04 November 2004 (2004-11-04) claims, p. 27, line 11 to p. 28, line 2 | 1-16 |
| A | JP 2019-527251 A (THÜRINGISCHES INSTITUT FÜR TEXTIL- UND KUNSTSTOFF-FORSCHUNG E.V) 26 September 2019 (2019-09-26) | 1-16 |
| A | WO 2019/078238 A1 (DAIKIN INDUSTRIES LTD) 25 April 2019 (2019-04-25) | 1-16 |
| A | JP 2008-1894 A (DAIKIN INDUSTRIES LTD) 10 January 2008 (2008-01-10) | 1-16 |
| A | WO 2019/058660 A1 (TATSUTA ELECTRIC WIRE & CABLE CO LTD) 28 March 2019 (2019-03-28) | 1-16 |
| A | JP 2019-116629 A (3M INNOVATIVE PROPERTIES CO) 18 July 2019 (2019-07-18) | 1-16 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**13**

**INTERNATIONAL SEARCH REPORT**
Information on patent family members

International application No.

**PCT/JP2022/008317**

| Patent document cited in search report | | | Publication date (day/month/year) | Patent family member(s) | | | Publication date (day/month/year) |
|---|---|---|---|---|---|---|---|
| JP | 2019-85475 | A | 06 June 2019 | (Family: none) | | | |
| WO | 2004/094527 | A1 | 04 November 2004 | US | 2006/0235140 | A1 | |
| | | | | claims, paragraphs [0123]-[0127] | | | |
| | | | | KR | 10-2006-0015523 | A | |
| | | | | CN | 1777644 | A | |
| | | | | TW | 200427699 | A | |
| JP | 2019-527251 | A | 26 September 2019 | US | 2019/0237224 | A1 | |
| | | | | WO | 2017/220747 | A1 | |
| | | | | DE | 102017113884 | A1 | |
| | | | | CA | 3029093 | A1 | |
| | | | | CN | 109328390 | A | |
| | | | | KR | 10-2019-0020127 | A | |
| WO | 2019/078238 | A1 | 25 April 2019 | US | 2020/0332081 | A1 | |
| | | | | EP | 3674365 | A1 | |
| | | | | KR | 10-2020-0042920 | A | |
| | | | | CN | 111212874 | A | |
| JP | 2008-1894 | A | 10 January 2008 | (Family: none) | | | |
| WO | 2019/058660 | A1 | 28 March 2019 | JP | 6462082 | B1 | |
| | | | | KR | 10-2020-0054905 | A | |
| JP | 2019-116629 | A | 18 July 2019 | JP | 2016-516880 | A | |
| | | | | US | 2016/0039995 | A1 | |
| | | | | WO | 2014/179432 | A1 | |
| | | | | CN | 105189641 | A | |
| | | | | KR | 10-2016-0003170 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019085475 A
- JP 2019116629 A